**Europäisches Patentamt**

**European Patent Office**

**Office européen des brevets**

(11) Veröffentlichungsnummer: **0 534 109 A1**

# (12) EUROPÄISCHE PATENTANMELDUNG

(21) Anmeldenummer: **92113518.2**

(22) Anmeldetag: **07.08.92**

(51) Int. Cl.5: **C01G 37/00**, C09C 1/00, C09C 1/34

(30) Priorität: **21.09.91 DE 4131548**

(43) Veröffentlichungstag der Anmeldung: **31.03.93 Patentblatt 93/13**

(84) Benannte Vertragsstaaten: **AT DE ES FR GB IT NL**

(71) Anmelder: **Degussa Aktiengesellschaft Weissfrauenstrasse 9 W-6000 Frankturt am Main 1(DE)**

(72) Erfinder: **Speer, Dietrich, Dr. Grünaustrasse 5 W-6450 Hanau 9(DE)**
Erfinder: **Kiss, Akos, Dr. Greifenhagenstrasse 10A W-6450 Hanau 9(DE)**
Erfinder: **Horst, Jenny Lindenstrasse 10 W-6460 Gelnhausen(DE)**

(54) **Braune Spinellfarbkörper auf der Basis von Zinkchromit, Verfahren zu deren Herstellung und deren Verwendung.**

(57) Die Erfindung betrifft neue braune Spinellfarbkörper auf der Basis von Zinkchromit, welche eisenfrei sind und ein Atomverhältnis von Chrom zu Zink im Bereich von 1 zu größer 0,5 bis 1 zu 2 aufweisen. Bevorzugte Farbkörper enthalten zusätzlich Mangan, wobei das Atomverhältnis Mn zu Cr maximal 0,2 beträgt.

Die Herstellung der Farbkörper umfaßt einen Glühprozeß eines Pulvergemischs aus den Oxiden oder Vorstufen derselben der im Pigment enthaltenen Metalle. Durch das gewählte Molverhältnis und eine Glühtemperatur oberhalb 1200 °C werden anstelle vorbekannter grau-grüner unattraktiver Produkte attraktive braune Farbkörper erhalten.

Die neuen Farbkörper lassen sich in Gegenwart von Glasfritten auch bei Einbrenntemperaturen oberhalb 1200 °C bis 1500 °C einsetzen und eignen sich für den gemeinsamen Brand von Träger und Dekor.

EP 0 534 109 A1

Rank Xerox (UK) Business Services
(3. 10 / 3.5 x / 3.0. 1)

Die Erfindung betrifft neue braune Spinellfarbkörper auf der Basis von Zinkchromit, welche im Gegensatz zu vorbekannten Farbkörpern auf dieser Basis eisenfrei sind. Die Herstellung erfolgt in für Spinellfarbkörper an sich bekannter Weise, wobei jedoch die Glühtemperatur des Pulvergemischs oberhalb des bekannten Bereiches liegt. Die neuen Farbkörper lassen sich für im Hochtemperaturbrand einbrennbare keramische Dekore verwenden.

Spinellfarbkörper auf der Basis von Zinkchromit sind bekannt, sie erfüllen aber in mehrfacher Hinsicht nicht die von Herstellern keramischer Dekore gewünschten Eigenschaften. Zinkchromit der Formel $ZnCr_2O_4$ ist ein Spinell, worin die $Zn^{2+}$-Ionen die tetraedrischen Postitionen und die $Cr^{3+}$- Ionen die oktaedrischen Lücken der kubisch dichtesten Packung von Sauerstoffatomen besetzen. $ZnCr_2O_4$ ist normalerweise ein grünlich-graues Produkt und coloristisch unattraktiv.

Spinelle auf der Basis von ZnO, $TiO_2$ und $Cr_2O_3$ sind aus der GB-PS 384,473 bekannt. Derartige Spinelle sind grün. Spinelle dieser Art lassen sich herstellen durch Glühen eines Pulvergemischs der Oxide, der Metalle oder Vorstufen der Oxide bei 800 bis 1100 °C, wobei das zu glühende Pulvergemiscn zusätzlich bekannte Flußmittel oder Mineralisatoren, wie Alkalihalogenide oder Alkalisulfate, enthalten kann.

Durch Einbau von Eisen in das Spinellgitter des Zinkchromits werden braune Farbkörper erhalten. Nachteil dieser braunen Spinellfarbkörper ist, wie dies auch für viele andere eisenhaltige Spinelle zutrifft, ihre begrenzte Temperaturstabilität in Gegenwart von Glasfritten. Derartige Pigmente verfärben sich beim Einbrennen daraus hergestellter Dekorfarben auf keramischen Erzeugnissen mit zunehmender Brenntemperatur. Solche Pigmente eignen sich somit nicht befriedigend für Anwendungen, welche Brenntemperaturen oberhalb 1200 °C, insbesondere oberhalb 1300 °C bis 1500 °C, erfordern, wie etwa neuartige Porzellanbrandverfahren, bei welchen der ungebrannte keramische Träger und eine darauf aufgebrachte Dekorschicht in einem einzigen Brennzyklus gebrannt werden.

Aufgabe der Erfindung war, neue braune Spinellfarbkörper auf der Basis von Zinkchromit zu synthetisieren, welche gegenüber Fe-haltigen Farbkörpern eine verbesserte Temperaturstabilität aufweisen. Bei der Herstellung der Pigmente sollten leicht handhabbare und toxisch möglichst unbedenkliche Rohstoffe eingesetzt werden können. Die Pigmente sollten in Hochtemperaturbrand-Dekorationsverfahren ohne nennenswerte Farbveränderung eingesetzt werden können.

Gefunden wurden braune Spinellfarbkörper auf der Basis von Zinkchromit, welche dadurch gekennzeichnet sind, daß sie eisenfrei sind und ein Atomverhältnis von Chrom zu Zink im Bereich von 1 zu größer 0,5 bis 1 zu 2 liegt. Vorzugsweise liegt in den erfindungsgemäßen Pigmenten das Atomverhältnis Cr zu Zn im Bereich von 1 zu 0,75 bis 1 zu 2.

Es wird angenommen, daß im Gitter der erfindungsgemäßen Spinelle Chrom teilweise in der vierwertigen Form vorliegt und zum Zwecke des Ladungsausgleichs Zinkionen Positionen des Chroms einnehmen. Üblicherweise führt das nicht im Spinellgitter gebundene Zinkoxid bei der Anwendung der Pigmente zu keinen Störungen. Bei Bedarf kann überschüssige ZnO aber durch eine Säurewäsche aus dem Pigment herausgelöst werden.

Die Pigmente können außer den Bestandteilen $Cr_2O_3$ und ZnO zur Modifizierung des Farbtons und/oder zur Stabilisierung des Farbtons bei sehr hohen Brenntemperaturen zusätzlich andere Metalle in begrenzter Menge im Spinellgitter enthalten, mit der Maßgabe, daß die braune Farbe erhalten bleibt. Unter begrenzter Menge wird ein Atomverhältnis dieser anderen Metalle zu Chrom von maximal 0,2 verstanden. Bei diesen modifizierenden Metallen handelt es sich vorzugsweise um Mangan, jedoch können auch im Spinell eingebaute Metalle, wie Mg, Ti, Al, Sn, Ni, Co und V, den Farbton modifizieren.

Erfindungsgemäße Pigmente, welche im wesentlichen nur $Cr_2O_3$ und ZnO enthalten, zeigen in Glasuren bei zunehmender Brenntemperatur eine geringe Farbverschiebung nach Grün - dies läßt sich an einem abnehmenden und gegebenenfalls negativ werdenden a-Wert im L,a,b-Farbmetriksystem erkennen. Durch Einbau von Mangan in das Spinellgitter läßt sich diese Farbverschiebung beheben. Besonders bevorzugte erfindungsgemäße Pigmente enthalten im wesentlichen nur Oxide von Chrom, Zink und Mangan und weisen ein Atomverhältnis Cr zu Zn zu Mn von 1 zu 0,75 bis 2 zu 0,01 bis 0,15 auf.

Die erfindungsgemäßen braunen Spinellfarbkörper auf der Basis von Zinkchromit lassen sich durch Glühen eines Pulvergemischs, enthaltend Chrom(III)oxid und Zinkoxid oder unterhalb der Glühtemperatur diese Oxide bildende Vorstufen, und Aufbereiten des Glühprodukts in an sich bekannter Weise herstellen, wobei das Verfahren dadurch gekennzeichnet ist, daß das verwendete Pulvergemisch Chrom(III)oxid und Zinkoxid oder Vorstufen dieser Oxide im Molverhältnis, jeweils berechnet als $Cr_2O_3$ und ZnO, im Bereich von 1 zu größer 1 bis 1 zu 4 enthält und bei einer Temperatur oberhalb 1200 °C geglüht wird.

Außer den vorerwähnten Rohstoffen kann das Pulvergemisch zur Modifizierung und/oder Stabilisierung des Farbtons auch andere Metalloxide oder Vorstufen derselben in begrenzter Menge enthalten, mit der Maßgabe, daß das Atomverhältnis der modifizierenden Metalle zu Chrom einen Wert von 0,2 nicht übersteigt. Infrage kommen Oxide von zum Beispiel Mn, Ti, Al, Mg, Sn, Ni, Co und V, insbesondere aber Oxide des Mn. Unter Vorstufen von Metalloxiden werden Verbindungen verstanden, welche unterhalb der Glühtemperatur in Oxide überführt werden, beispielsweise Sulfate, Oxidhydrate, Carbonate, Oxalate.

Bevorzugte Farbkörper, welche auch bei hohen Einbrenntemperaturen von diese Farbkörper und Glasfritten enthaltenden Dekorationssystemen keine Farbverschiebung nach Grün zeigen, lassen sich dadurch herstellen, daß das zu glühende Pulvergemisch im wesentlichen aus $Cr_2O_3$, ZnO und einer Mn-Verbindung aus der Reihe MnO, $MnO_2$, $Mn_2O_3$ oder einem Permanganat besteht, wobei das Atomverhältnis Cr zu Zn zu Mn 1 zu 0,75 bis 2 zu 0,01 bis 0,15 beträgt. "Im wesentlichen" bedeutet, daß das Pulvergemisch zusätzlich Mineralisatoren, welche nicht in das Spinellgitter eingebaut werden, sowie aus den eingesetzten Rohstoffen stammende Verunreinigungen enthalten kann.

Üblicherweise ist die Mitverwendung von Mineralisatoren bei der Herstellung der Farbkörper nicht erforderlich, zum Teil sogar eher negativ zu bewerten: Überraschenderweise wird während des Glühens eines Pulvergemischs aus $Cr_2O_3$, ZnO und $KMnO_4$ im oben genannten Verhältnis bei der bevorzugten Glühtemperatur von 1250 °C bis 1350 °C im offenen Tiegel in Gegenwart von Luft kaum Chromat gebildet. Durch die Mitverwendung von beispielsweise Natriumfluorid als Mineralisator steigt der Gehalt an Chromat an.

Die Glühdauer richtet sich nach der gewählten Glühtemperatur. Eine Glühdauer von 1 bis 5 Stunden bei einer Glühtemperatur im Bereich von 1250 bis 1350 °C ist im allgemeinen ausreichend. Das zu glühende Pulvergemisch wird in bekannter Weise vor der Glühung homogenisiert, beispielsweise durch eine Mahlung in Kugelmühlen, und dann in offenen Tiegeln oder nach Verpressung zu Formkörpern als solche in geeigneten Öfen geglüht. Die Glühung kann in Elektrokammeröfen oder Tunnelöfen oder Öfen anderer Bauart durchgeführt werden.

Nach dem Glühprozeß wird das Glühprodukt einer üblichen Nachbehandlung zugeführt: Hierzu gehört ein Aufmahlen auf die gewünschte Pigmentfeinheit, was vorzugsweise durch eine Naßmahlung mit Wasser, etwa in Kugelmühlen, bewerkstelligt wird. Durch eine solche Naßmahlung wird gleichzeitig gegebenenfalls in geringer Konzentration gebildetes Chromat aus dem Pigment extrahiert. Nach der Mahlung und Wasserwäsche wird in üblicher Weise getrocknet.

Es war aus dem Stand der Technik nicht vorhersehbar, daß anstelle des unattraktiven grau-grünen vorbekannten $ZnCr_2O_4$-Spinells durch die erfindungsgemäße Erhöhung der Glühtemperatur und Auswahl der Molverhältnisse der Ausgangskomponenten ein attraktives, braunes Spinell-Pigment erhalten wird. Überraschend war zudem, daß durch den Einbau einer kleinen Menge Mangan in das Pigment die Farbstabilität bei sehr hohen Temperaturen deutlich gesteigert wird.

Die nach dem erfindungsgemäßen Verfahren erhältlichen neuen braunen Spinellfarbkörper können zum Färben und Dekorieren keramischer Erzeugnisse, wie Porzellan, Steingut und Steinzeug, in Gegenwart von Glasfritten verwendet werden. Die Einbrenntemperaturen können dabei im üblichen Bereich von meist 700 bis 1100 °C oder darüber liegen. Die Temperatur richtet sich insbesondere nach der Zusammensetzung und damit dem Erweichungsbereich der im verwendeten Dekorationssystem anwesenden Glasfritte. Die Temperatur- und Glasurstabilität der erfindungsgemäßen Pigmente erlaubt auch Einbrenntemperaturen über 1200 °C und insbesondere über 1300 bis 1500 °C. Dieser unerwartete Vorteil ermöglicht es, die Pigmente auch in sogenannten Hochtemperatur-Brennverfahren, wobei der keramische Träger und das Dekor gleichzeitig in einem einzigen Brennvorgang gebrannt werden, einzusetzen.

Die nachstehenden Beispiele sollen die erfindungsgemäßen Farbkörper und das Verfahren zu ihrer Herstellung sowie deren Verwendung verdeutlichen.

**Beispiele 1-6: Herstellung der Farbkörper**

Pulvergemische der in Tabelle 1 angegebenen Ausgangsstoffe und Zusammensetzungen - Angabe in Gew.-%, bezogen auf das Pulvergemisch - werden in einer Kugelmühle 20 Minuten homogenisiert. Die Gemische werden in offenen Schamotte-Tiegeln in einem Elektrokammerofen zur Reaktion gebracht. Die Glühtemperatur beträgt 1300 °C, die Glühdauer 3 Stunden. Die Glühprodukte werden naß aufgemahlen und das Pigment nach Abtrennung des Wassers getrocknet. Erhalten wird jeweils ein braunes Pigment.

Tabelle 1

| Beispiel | $Cr_2O_3$ | ZnO | $KMnO_4$ |
|----------|-----------|------|----------|
| 1 | 50 | 50 | - |
| 2 | 49,8 | 49,2 | 1,0 |
| 3 | 47,8 | 43,0 | 9,2 |
| 4 | 31,8 | 68,2 | - |
| 5 | 33 | 66 | 1 |
| 6 | 38,2 | 60,5 | 9,3 |

**Beispiele 7-12: Verwendung der Pigmente**

a) Die Pigmente der Beispiele 1-6 wurden in einer transparenten Prüfglasur (Typ Nr. 40260 der Degussa AG, enthaltend 50,6 % $SiO_2$, 8,0 % CaO, 11,2 % $Al_2O_3$, 15,5 % PbO, 10 % $B_2O_3$, 3,2 % $K_2O$) in 5 gew.-%iger Einfärbung getestet: Glühtemperatur 1060 °C; Bestimmung der L,a,b-Werte (CIE-Lab-System nach DIN 5033). Die Ergebnisse folgen aus Tabelle 2.

b) In gleicher Weise wie oben angegeben, wurde eine 5 gew.-%ige Einfärbung in einer praktisch borsäurefreien Sanitärglasur (Degussa AG, Typ-Nr. 49230) getestet; Glühtemperatur 1250 °C, Aufheizrate 150 k/h, Haltezeit 30 Minuten; L,a,b-Wert siehe Tabelle 2.

## Tabelle 2

| Beispiel Nr. | Eingesetztes Pigment gemäß Beispiel Nr. | Lab-Werte (a) Prüfglasur | (b) Sanitärglasur |
|---|---|---|---|
| 7 a/b | 1 | L = 22,03<br>a = 2,50<br>b = 6,89 | L = 46,12<br>a = 0,39<br>b = 10,11 |
| 8 a/b | 2 | L = 19,68<br>a = 2,19<br>b = 5,98 | L = 44,02<br>a = 0,14<br>b = 9,36 |
| 9 a/b | 3 | L = 25,65<br>a = 2,72<br>b = 6,82 | L = 43,87<br>a = 1,96<br>b = 10,25 |
| 10 a/b | 4 | L = 21,82<br>a = 3,07<br>b = 6,69 | L = 55,08<br>a = -2,35<br>b = 8,51 |
| 11 a/b | 5 | L = 20,66<br>a = 2,67<br>b = 3,76 | L = 53,74<br>a = -1,16<br>b = 9,43 |
| 12 a/b | 6 | L = 15,07<br>a = 4,41<br>b = 5,54 | L = 44,20<br>a = 3,68<br>b = 9,41 |

**Patentansprüche**

1. Braune Spinellfarbkörper auf der Basis von Zinkchromit, dadurch gekennzeichnet,

daß sie eisenfrei sind und ein Atomverhältnis von Chrom zu Zink im Bereich von 1 zu größer 0,5 bis 1 zu 2 aufweisen.

2. Farbkörper nach Anspruch 1,
dadurch gekennzeichnet,
daß in ihnen zusätzlich Mangan eingebaut ist und das Atomverhältnis Mangan zu Chrom maximal 0,2 beträgt.

3. Farbkörper nach Anspruch 1 oder 2,
dadurch gekennzeichnet,
daß das Atomverhältnis von Cr zu Zn im Bereich von 1 zu 0,75 bis 1 zu 2 liegt.

4. Verfahren zur Herstellung brauner Spinellfarbkörper auf der Basis von Zinkchromit durch Glühen eines Pulvergemischs, enthaltend Chrom(III)oxid und Zinkoxid oder Vorstufen dieser Oxide, und Aufbereiten des Glühprodukts in an sich bekannter Weise,
dadurch gekennzeichnet,
daß das verwendete Pulvergemisch Chrom(III)oxid und Zinkoxid oder Vorstufen dieser Oxide im Molverhältnis, jeweils berechnet als $Cr_2O_3$ und ZnO, im Bereich von 1 zu größer 1 bis 1 zu 4 enthält und bei einer Temperatur oberhalb 1200 °C geglüht wird.

5. Verfahren nach Anspruch 4,
dadurch gekennzeichnet,
daß das zu glühende Pulvergemisch außer $Cr_2O_3$ und ZnO oder Vorstufen dieser Oxide zusätzlich ein Manganoxid oder eine Vorstufe eines Manganoxids enthält und das Atomverhältnis Mn zu Cr maximal 0,2 beträgt.

6. Verfahren nach Anspruch 4 oder 5,
dadurch gekennzeichnet,
daß das Pulvergemisch aus $Cr_2O_3$, ZnO und einer Mn-Verbindung aus der Reihe MnO, $Mn_2O_3$, $MnO_2$ oder einem Permanganat besteht und das Atomverhältnis Cr zu Zn zu Mn 1 zu 0,75 bis 2 zu 0,01 bis 0,15 beträgt.

7. Verfahren nach einem der Ansprüche 4 bis 6,
dadurch gekennzeichnet,
daß man das Pulvergemisch bei einer Temperatur im Bereich von 1250 °C bis 1350 °C 1 bis 5 Stunden glüht, das Glühprodukt naß aufmahlt, mit Wasser wäscht und anschließend trocknet.

8. Verwendung brauner Spinellfarbkörper gemäß einem der Ansprüche 1 bis 3 zum Färben und Dekorieren keramischer Erzeugnisse in Gegenwart von Glasfritten bei Einbrenntemperaturen oberhalb 1200 °C, insbesondere oberhalb 1300 °C bis 1500 °C.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | P.PASCAL 'NOUVEAU TRAITE DE CHIMIE MINERALE' 1959 , MASSON ET CIE , PARIS TOME XIV * Seite 191, Absatz 3 - Seite 192 * --- | 1 | C01G37/00 C09C1/00 C09C1/34 |
| A | 'GMELINS HANDBUCH DER ANORGANISCHEN CHEMIE' 1962 , VERLAG CHEMIE , WEINHEIM SYSTEM NR 52 ,TEIL B, * Seite 851 - Seite 852 * --- | 1,4,7 | |
| A | 'GMELIN HANDBUCH DER ANORGANISCHEN CHEMIE' 1975 , SPRINGER-VERLAG , BERLIN HEIDELBERG NEW YORK SYSTEM NR 56 TEIL C3 * Seite 199 - Seite 200 * --- | 1-3 | |
| A | AMERICAN CERAMIC SOCIETY BULLETIN Bd. 66, Nr. 11, November 1987, COLUMBUS US Seiten 1600 - 1604 R.A.EPPLER 'SELECTING CERAMIC PIGMENTS' ----- | 8 | |

**RECHERCHIERTE SACHGEBIETE (Int. Cl.5)**

C01G
C09C

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1992 | libberecht-verbeeck |